# EUROPÄISCHE PATENTSCHRIFT

(11) **EP 1 623 365 B1**
(45) Veröffentlichungstag und Bekanntmachung des Hinweises auf die Patenterteilung: **04.03.2009**
(21) Anmeldenummer: 04724269.8
(22) Anmeldetag: 30.03.2004
(51) Int. Cl.: G06K 13/08

(54) **KARTENAUFNAHMEVORRICHTUNG**
CARD RECEIVING DEVICE
DISPOSITIF DE RECEPTION DE CARTE

(30) Priorität: 12.05.2003 DE 10321232
(43) Veröffentlichungstag der Anmeldung: 08.02.2006
(73) Patentinhaber: Continental Automotive GmbH, 30165 Hannover (DE)
(72) Erfinder: RIESTER, Thomas, 78052 Villingen-Schwenningen (DE); WAHLER, Torsten, 78073 Bad Dürrheim (DE)
(86) Internationale Anmeldenummer: PCT/EP2004/003361
(87) Internationale Veröffentlichungsnummer: WO 2004/100057

(56) Entgegenhaltungen:
- EP-A- 0 940 765
- DE-A- 4 402 229

## Beschreibung

Die Erfindung betrifft eine Kartenaufnahmevorrichtung zum vollständigen, automatischen Einzug einer Karte in die Kartenaufnahmevorrichtung, mit einer Klemmeinheit, welche die Karte festlegt, mit einem mit der Klemmeinheit kinetisch verbundenen Getriebe, mit mindestens einem Antrieb, der das Getriebe antreibt und so die Klemmeinheit in die Kartenaufnahmevorrichtung transportiert.

Der Schwerpunkt der Anwendung der erfindungsgemäßen Vorrichtung liegt im Bereich von Fahrtenschreibern oder bzw. Vorrichtungen zur Erfassung der Arbeitszeiten und Ruhezeiten von Nutzfahrzeugfahrern. Andere Anwendungen sind jedoch ebenfalls denkbar, z. B. im Bereich des Bank- und Zahlungswesens oder bei Schließsystemen. Vorteilhafte Anwendung findet die Erfindung in Kombination mit allen Arten von kartenförmigen Datenträgern. Aufgrund der hohen wirtschaftlichen und rechtlichen Bedeutung der zu erfassenden Daten bei Fahrtenschreibern, müssen die Aufzeichnungen zuverlässig gegen Manipulationen gesichert werden. Die Sicherungsmaßnahmen betreffen sowohl die Datenerfassung und Datenübertragung als auch die Übertragung und Speicherung der erfassten Daten im Speicher der Karte. Einschlägige Normen stellen Strenge Anforderungen an den durch die Maßnahmen zu erreichenden Sicherheitsstandard. So ist vorgeschrieben, dass die Karte während der Lese- und Schreibvorgänge vollständig von der Kartenaufnahmevorrichtung aufgenommen ist und gegen die Umwelt mittels geeigneter Verschlussvorrichtungen isoliert ist. Die Verschlussvorrichtungen müssen in der Geschlossen-Stellung während der Lese- und Schreibvorgänge arretiert sein. Zusätzliche Schwierigkeiten ergeben sich aufgrund durch Verschmutzung bedingter Funktionsausfälle herkömmlicher Vorrichtungen, insbesondere durch Kontaktunterbrechungen oder sogar beim Einzug der Karte. Der Einzug und die exakte Positionierung der Karte an den Kontakten der Vorrichtung sind problematisch, weil die verschiedenen Karten im Verhältnis zu der erforderlichen Positionsgenauigkeit zu den Kontakten der Vorrichtung hohe Fertigungstoleranzen aufweisen. Da die Karten sich in der Wahrnehmung des Benutzers vor allem durch eine hohe Robustizität auszeichnen, werden diese in der Regel nicht mit der eigentlich erforderlichen Sorgfalt behandelt, so dass zusätzlich zu den durch die Fertigung bedingten Toleranzen Verformungen und Beschädigungen die Funktionsweise im Zusammenspiel mit den Kartenaufnahmevorrichtungen beeinträchtigen. Darüber hinaus stellen die Betriebsbedingungen in Kraftfahrzeugen erhöhte Anforderungen an die Funktionssicherheit aufgrund der starken Schwingungen und unzähligen Stöße sowie der weitreichenden Temperaturschwankungen. Die Realisierung der Manipulationssicherheit und der gewünschte Komfort bei der Handhabung machen einen vollautomatischen Karteneinzug erforderlich. Diesem Erfordernis nachzukommen stellt die Konstruktion jedoch vor große Schwierigkeiten, weil der zur Verfügung stehende Bauraum in einem Fahrtenschreiber in der Größe eines Autoradios nur etwa eine Höhe von 10 mm für den vollautomatischen Einzug bereitstellt.

Aus der DE-A-102 08 259 ist bereits eine Chipkarten-Aufnahmevorrichtung der vollautomatischen Bauart bekannt, bei der zwei Spannelemente auf einem Schlitten gefedert gelagert sind, welche die eingegebene Chipkarte zangenartig greifen und in eine Lese-/Schreibposition transportieren.

Die vorgeschlagene Vorrichtung zum vollautomatischen und vollständigen Einzug einer Karte in einer Kartenaufnahmevorrichtung ist jedoch äußerst umständlich und weist auf Grund der Vielzahl an Bauteilen eine hohe Ausfallwahrscheinlichkeit auf. Darüber hinaus bereitet der Transport der aufzunehmenden Karte in die Lese- und Schreibposition mit der für eine zuverlässige Kontaktierung erforderlichen Präzision mittels der herkömmlichen Vorrichtung Schwierigkeiten, insbesondere deshalb, weil der für den vollständigen Einzug der Karte erforderliche lange Transportweg der Klemmeinheit ein einer präzisen Positionierung in der Endlage widerstrebendes Attribut ist. Eine genaue Positionierung mit einem langen Transportweg zu vereinen bedeutet im Stand der Technik, ein besonders fein abgestimmtes Getriebe mit einem präzise ansteuerbaren Antrieb über einen großen Verfahrweg zu betreiben und mittels einer aufwendigen Regelung zu steuern. Der dafür erforderliche Aufwand erzeugt hohe Kosten und hat gleichzeitig unakzeptabel hohe Zugriffszeiten zur Folge.

Aus der DE 44 02 229 A1 ist ein Kartenleser mit einem motorisch bewegten Schlitten und einer Anordnung zur Verriegelung bekannt.

Ausgehend von den Problemen und Nachteilen des Standes der Technik hat es sich die Erfindung zur Aufgabe gemacht, eine Kartenaufnahmevorrichtung zu schaffen, die einen absolut sicheren Transport der Karte und eine verlässliche Kontaktierung in der Lese- und Schreibposition unter den zuvor erläuterten ungünstigen Randbedingungen ermöglicht und kostengünstig sowie serientauglich in flachem Format herstellbar ist.

Erfindungsgemäß wird die Aufgabe durch eine Kartenaufnahmevorrichtung der eingangs genannten Art gelöst, bei welcher die Kartenaufnahmevorrichtung ein erstes Getriebe und ein zweites Getriebe aufweist, welche jeweils zumindest zeitweise von einem Antrieb angetrieben sind, die Getriebe an die Klemmeinheit kinetisch ankoppelbar sind, in einer ersten Transportphase das erste Getriebe an die Klemmeinheit kinetisch angekoppelt ist und in einer zweiten Transportphase das zweite Getriebe an die Klemmeinheit kinetisch angekoppelt ist.

Die Möglichkeit der Ankopplung unterschiedlicher Getriebe an die Klemmeinheit in unterschiedlichen Transportphasen der in der Klemmeinheit verspannten Karte hat den entscheidenden Vorteil, dass die Geschwindigkeit, Positionsgenauigkeit, Beschleunigungsphasen und Verzögerungen in der Bewegung auf die jeweilige Bewegungsphase genau abgestimmt werden können. Während zu Beginn des Transports der Karte nach einem Greifen der Karte ein schneller Einzug gewünscht ist, ist anschließend ein präzises Positionieren der Karte an dem die Kontakte aufnehmenden Kontaktsatz der Lese- und Schreibvorrichtung erforderlich. Daneben eröffnet das Einkoppeln unterschiedlicher Getriebe gleichzeitig das Ein- und Ausschalten zusätzlicher, mit den unterschiedlichen Getrieben verknüpfter Funktionen, wie zum Beispiel der Antrieb einer Verriegelungseinheit zum Verriegeln eines Verschlusses der Einschuböffnung der Vorrichtung oder der Antrieb einer Arretiereinheit zum Arretieren der Verriegelung. Gegebenenfalls kann auch eine an das zweite Getriebe angekoppelte gesonderte Ausrichteinheit ein exaktes Positionieren der Karte in der Endposition übernehmen.

Besonders vorteilhaft ist hierbei eine automatische Einkopplung oder Ankopplung der unterschiedlichen Getriebe an die Klemmeinheit bzw. bei nur einem Antrieb zwischen die Klemmeinheit und diesen Antrieb. Die automatische An- oder Einkopplung kann in Abhängigkeit von der Transportphase erfolgen und vorteilhaft mechanisch aber auch elektromotorisch in Zusammenwirken mit entsprechenden Sensoren, welche den Ablauf der einzelnen Transportphasen erfassen, initiiert sein.

Eine Reduktion des Bauraumes und der Herstellungskosten ergibt sich, wenn für den Antrieb des ersten Getriebes und des zweiten Getriebes nur ein Antrieb vorgesehen ist, das erste Getriebe und das zweite Getriebe zwischen dem Antrieb und der Klemmeinheit kinetisch einkoppelbar sind, in einer ersten Transportphase das erste Getriebe zwischen dem Antrieb und der Klemmeinheit kinetisch eingekoppelt ist und in einer zweiten Transportphase das zweite Getriebe zwischen dem Antrieb und der Klemmeinheit kinetisch eingekoppelt ist. Bei der getrieblichen Gesamtanordnung handelt es sich um ein schaltbares Gesamtgetriebe mit zwei einzelnen ein- und ausschaltbaren Getrieben an einem Antrieb. In vorteilhafter Weise reduziert sich die Ausfallwahrscheinlichkeit der Anordnung, da nur noch ein elektrischer Antrieb benötigt wird. In gleicher Weise wird der Aufwand zur Ansteuerung des Antriebes bzw. der Antriebe verringert. Hierbei ist es sinnvoll, das erste Getriebe in der zweiten Transportphase aus der Kraftübertragung zwischen dem Antrieb und der Klemmeinheit auszukoppeln. Das erste Getriebe unterscheidet sich vorteilhaft von dem zweiten durch seine funktionelle Einbindung. Während das erste Getriebe die Klemmeinheit und zweckmäßig zusätzlich den Einzug antreibt und steuert, übernimmt das zweite den Antrieb der Feinpositionierung. Daneben ist es sinnvoll, wenn das zweite Getriebe auch eine Verriegelungseinheit antreibt und steuert. Zweckmäßig können die Funktionen der Verriegelungseinheit und die Aufgabe der Feinpositionierung miteinander verknüpft werden. Ein vorteilhafte Ausbildung sieht hier vor, dass Verriegelungselemente die Karte vorzugsweise an der eingangsseitigen Kante und oder gerundeten Ecken in eine Endposition drücken.

Für die Aufgabe des ersten Getriebes ist es zweckmäßig, wenn dieses eine mit der Klemmeinheit verbundene Zahnstange und ein mit dem Antrieb verbundenes Antriebszahnrad aufweist, welches mit der Zahnstange in der ersten Transportphase im Eingriff steht. Zweckmäßig können weitere getriebliche Übertragungselemente, zum Beispiel Zahnräder oder Riementriebe zwischen dem Antrieb und der Zahnstange angeordnet sein, um der Bewegung die gewünschte Charakteristik aufzuprägen. Vorteilhaft ist die Verwendung einer Zahnstange, weil in der ersten Transportphase ein verhältnismäßig langer Transportweg überwunden werden muss. Derart lange Transportwege erfordern bei im Stand der Technik bekannten Transporteinrichtungen mit Gummiwalzen die Hintereinander-Anordnung einer Vielzahl von Gummiwalzen, damit die Karte vollständig in die Vorrichtung eingezogen werden kann.

Für die Transportaufgabe des zweiten Getriebes ist es zweckmäßig, wenn das zweite Getriebe eine kulissenartige erste Führung aufweist. Eine kulissenartige Führung kann vorteilhaft auf die äußerst spezielle Bewegungscharakteristik in einer zweiten Transportphase abgestimmt werden und erlaubt insbesondere die Realisierung von Verzögerungen, Beschleunigungen und sogar unstetigen Bewegungsmustern bei gleich bleibender Antriebsdrehzahl, je nach Verlauf der Kulisse bzw. kulissenartigen Führung. Erst durch die erfindungsgemäße Nutzung zweier unterschiedlicher Getriebe wird es möglich, dass das zweite Getriebe mit einer Verriegelungseinheit zur Verriegelung eines Verschlusses einer Eingabeöffnung für die aufzunehmende Karte kinetisch gekoppelt ist und die Verriegelungseinheit von dem zweiten Getriebe gesteuert und angetrieben ist. Erst durch die erfindungsgemäße Anordnung zweier unterschiedlicher Getriebe ist es möglich, mit einem Getriebe verknüpfte Funktionen durch Einkoppeln dieses Getriebes einzuschalten, wie zum Beispiel die Verriegelung einer Verriegelungseinheit durch das Einschalten des zweiten Getriebes zu initiieren.

In weiterer Ausgestaltung ist es zweckmäßig, wenn das erste Getriebe derart ausgebildet ist, dass es vor dem Erreichen einer Lese-/Schreibposition der Karte ausgekoppelt ist, das zweite Getriebe ein um eine erste Drehachse drehbares erstes Führungsbauteil mit einer ersten kulissenartigen Führung aufweist, die derart ausgebildet ist, dass sie mit einem mit der Klemmeinheit in Verbindung stehenden ersten Führungselement in Eingriff steht, wenn das erste Getriebe außer Eingriff gerät und die erste Führung die Klemmeinheit in die Lese-/Schreibposition transportiert. Zweckmäßig ist das erste Führungsbauteil auf einer ersten Drehachse gemeinsam mit dem Antriebszahnrad angeordnet. Die gemeinsame Anordnung auf einer Drehachse stellt die Synchronisation dieser Bauelemente sicher und reduziert die Anzahl der erforderlichen Lagerungen.

Entsprechend der Bewegungsaufgabe der Klemmeinheit ist es zweckmäßig, wenn die Kartenaufnahmevorrichtung eine erste lineare Lagerung aufweist, mittels derer die Klemmeinheit in Einwärtsrichtung linear gelagert ist. Auf diese Weise wird der Freiheitsgrad der Bewegung der Klemmeinheit bestimmungsgemäß reduziert. Die Lagerung sollte kostengünstig als Gleitlager ausgebildet sein.

Für eine möglichst hohe Toleranz gegenüber einer unsachgemäßen Eingabe der Karte in die Kartenaufnahmevorrichtung ist es zweckmäßig, wenn das erste Getriebe eine lineare Verzahnung aufweist, die Bestandteil eines Zahnstangenelementes ist und zwischen dem Zahnstangenelement und der Klemmeinheit ein elastisches Element angeordnet ist und so die Klemmeinheit an dem Antrieb des ersten Getriebes federnd gelagert ist. Auf diese Weise können gewaltsam eingeschobene Karten den Antrieb und das sich an den Antrieb anschließende Getriebe nicht beschädigen, da der Kartenvorschub von dem elastischen Element, das zweckmäßig als Zugfeder oder Druckfeder ausgebildet ist, aufgenommen wird. Daneben bekommt der Benutzer eine sensorische Rückmeldung bei Erreichen der Karte eines in der Klemmeinheit befindlichen Anschlags.

Gleichermaßen ist es zweckmäßig, wenn das erste Führungselement fester Bestandteil des Zahnstangenelementes ist. Bei vorgenannter Anordnung eines elastischen Elements befindet sich auf diese Weise das erste Führungselement bereits auf der vor unsachgemäßer Einwirkung geschützten Seite des Getriebes.

Die Vorzüge einer kulissenartigen Führung werden in besonderer Weise ausgenutzt, wenn drehstarr mit dem ersten Führungsbauteil ein zweites Führungsbauteil mit einer zweiten Führung verbunden ist, welche eine Verriegelungseinheit steuert und antreibt. Die Führungen sind hier zweckmäßig in ihrem Verlauf auf ein optimales synchrones Zusammenwirken der angetriebenen und gesteuerten Einheiten der gesamten Vorrichtung ausgelegt.

Damit die Führungsbauteile die Führungselemente stets sicher führen, ist es sinnvoll, wenn die Führungen als Nuten oder Schlitze ausgebildet sind und auf diese Weise kein Führungselement aus der entsprechenden Führung geraten kann. In Zusammenspiel mit der linearen Lagerung der Klemmeinheit liegt in jeder Bewegungsphase eine eindeutige Zwangssteuerung der mechanischen Bauteile vor.

Zusätzliche Funktionalitäten lassen sich verwirklichen, wenn eine Führung eine Abzweigung in eine andere Führung aufweist, insbesondere die zweite Führung eine Abzweigung in eine dritte Führung aufweist, in welche das zweite Führungselement eingleitet, wenn oder nachdem das erste Führungselement in der ersten Führung in Eingriff gerät.

Eine zweckmäßige Methode das Eingleiten des zweiten Führungselements in die dritte Führung zu veranlassen, ist Gegenstand einer vorteilhaften Weiterbildung der Erfindung, welche vorschlägt, dass die Klemmeinheit ein Anschlagelement aufweist, welches den Stellhebel bei Bewegung der Klemmeinheit in Einwärtsrichtung anstößt, so dass das zweite Führungselement in die dritte Führung gerät.

Damit die zweite Führung den Bewegungsablauf während der ersten Transportphase nicht behindert oder blockiert ist es sinnvoll, wenn sie eine zu der ersten Drehachse konzentrische Kreisform aufweist. Auf diese Weise wird der Stellhebel außerdem kontrolliert in einer Position gehalten. In gleicher Weise ist es sinnvoll, wenn die erste Führung zwei Abschnitte, einen ersten Abschnitt und einen zweiten Abschnitt aufweist, wobei der zweite Abschnitt zu der ersten Drehachse konzentrisch kreisförmig ausgebildet ist. Auf diese Weise verharrt die Klemmeinheit während des Verriegelungsvorgangs des Verschlusses der Einschuböffnung an dem gleichen Ort in der Kartenaufnahmevorrichtung.

Zur Steuerung des Antriebs ist es zweckmäßig, wenn mindestens ein Sensor die Stellung des Stellhebels an eine Kontrolleinheit meldet. Die Kontrolleinheit kann einerseits die korrekte Funktion der Vorrichtung überwachen und andererseits Steuersignale an den Antrieb entsenden, insbesondere den Antrieb abschalten oder die Drehrichtung umkehren.

Im Folgenden ist die Erfindung anhand eines speziellen Ausführungsbeispiels zur Verdeutlichung unter Bezugnahme auf Zeichnungen näher beschrieben. Es zeigen:
- Figur 1: eine perspektivische, vereinfachte Darstellung einer Klemmeinheit,
- Figur 2, 3: jeweils eine perspektivische Darstellung eines Führungsbauteils in einer Sicht von oben bzw. unten,
- Figur 4, 5: jeweils eine perspektivische Darstellung eines Stellhebels in der Sicht von unten bzw. oben,
- Figur 6a - 9b: jeweils eine Darstellung einer erfindungsgemäßen Kartenaufnahmevorrichtung als Draufsicht (A) und Unteransicht (B) in verschiedenen Transportphasen der Klemmeinheit bzw. Karte,
- Figur 10: ein Ablaufdiagramm der Schaltzustände des Antriebs und der Getriebe in Abhängigkeit von der Transportphase.

In der Folge ist mit einer ersten Transportphase ein Klemmen einer aufzunehmenden Karte und ein Einziehen in eine erfindungsgemäße Kartenaufnahmevorrichtung bezeichnet und mit einer zweiten Transportphase eine Verriegelung eine Verschlusses der Vorrichtung und eine Feinpositionierung der Karte in einer Endposition. Der wesentliche Unterschied zwischen den Transportphasen besteht in der kinematischen Einkopplung unterschiedlicher Getriebe. Während der ersten Transportphase ist ein erstes Getriebe 4 im Eingriff und während der zweiten Transportphase ein zweites Getriebe 5.

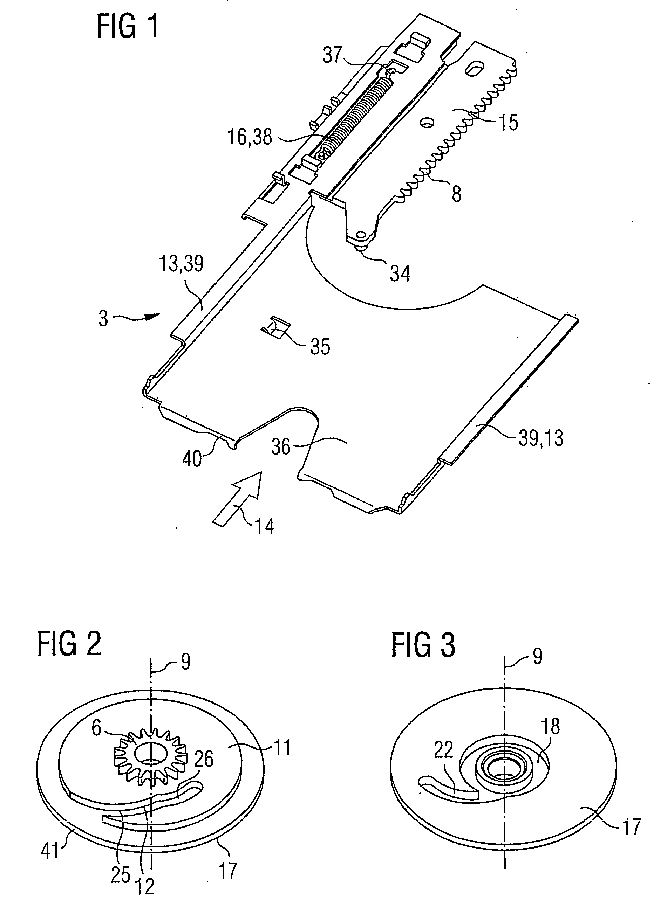

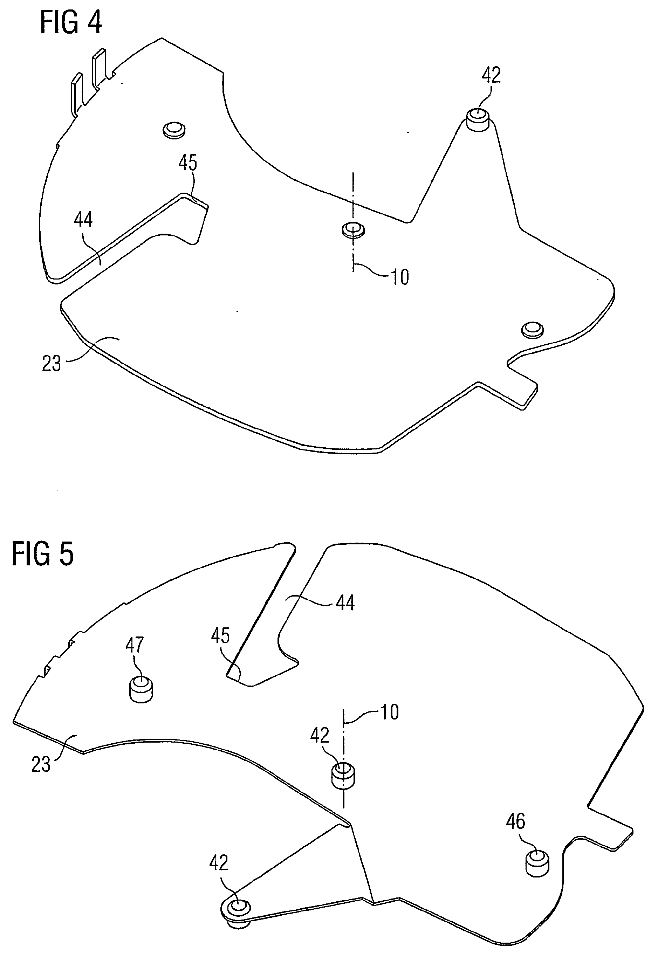

Die in Figur 1 vereinfacht dargestellte Klemmeinheit 3 umfasst im Wesentlichen einen Schlitten 36 und ein Zahnstangenelement 15 mit einer Verzahnung 8, beide Bestandteile des ersten Getriebes 4, welches Zahnstangenelement 15 federnd an einem Ausleger 37 des Schlittens 36 angebracht ist. Das Zahnstangenelement 15 ist mittels eines elastischen Elements 16, nämlich einer Zugfeder 38, an dem Ausleger 37 des Schlittens 36 in einer Einwärtsrichtung 14 federnd gelagert. Ebenfalls in Einwärtsrichtung 14 verläuft eine erste lineare Lagerung 13 ausgebildet als zwei seitlich des Schlittens 36 angeordnete Gleitlagerflächen 39. Der Schlitten 36 ist als Blechteil ausgeführt und eingangsseitig mit Einlaufschrägen 40 zum Einführen einer Karte 2 versehen. Rückseitig einer Auflagefläche für die Karte 2 des Schlittens 36 ist ein Anschlagelement 35 an dem Schlitten 36 angeformt, welches einen in Figur 4, 5 dargestellten Stellhebel 23 beim Übergang in eine zweite Transportphase steuernd anstößt. Das sich in Einwärtsrichtung 24 erstreckende Zahnstangenelement 15 weist neben der Verzahnung 8 ein erstes Führungselement 34 auf, welches mit dem Zahnstangenelement 15 einstückig verbunden ist.

In den Figuren 2, 3 ist ein Antriebszahnrad 6 mit dem Bezugszeichen 6, ein erstes Führungsbauteil 11 mit dem Bezugszeichen 11 und ein zweites Führungsbauteil 17 mit dem Bezugszeichen 17 versehen. Beide Führungsbauteile 11, 17 sind Bestandteile des zweiten Getriebes 5. Der Außenumfang 41 des zweiten Führungsbauteils 17 ist mit einer nicht dargestellten Verzahnung versehen, welche im Betrieb direkt oder im Anschluss an ein Getriebe mit einem Abtriebszahnrad eines Elektromotors in Eingriff steht. Das Antriebszahnrad 6 für das Zahnstangenelement 15 bildet mit den Führungsbauteilen 11, 17 ein einstückiges Bauelement. Das erste Führungsbauteil 11 weist eine erste Führung 12 auf mit einem ersten Abschnitt 25 und einem zweiten Abschnitt 26. Der zweite Abschnitt 26 ist konzentrisch kreisförmig zu einer ersten Drehachse 9 ausgebildet. Gerät das erste Führungselement 34 des Zahnstangenelements 15 von dem ersten Abschnitt 25 der als Nut ausgebildeten ersten Führung 12 in den zweiten Abschnitt 26, so bewegt sich die Klemmeinheit 3 bei Drehung des Führungsbauteils 11 nicht. In der in Figur 3 dargestellten Sicht von unten des zweiten Führungsbauteils 17 ist die als Nut ausgebildete zweite Führung 18 und dritte Führung 22 gezeigt. Die zweite Führung 18 und die dritte Führung 22 sind in einer Abzweigung 21 miteinander verbunden. Die Führungen 18, 22 des zweiten Führungsbauteils 17 führen während des Betriebes ein an dem Stellhebel 23 der Figuren 4, 5 angebrachtes zweites Führungselement 42. Während der ersten Transportphase, während das erste Getriebe 4 für ein Klemmen und den Vorschub der Klemmeinheit 3 sorgt, befindet sich das zweite Führungselement 42 des zweiten Getriebes in der zweiten Führung 18, welche um die Drehachse 9 kreisförmig konzentrisch ausgebildet ist, so dass sich das zweite Führungselement 42 in der ersten Transportphase nicht bewegt und sich der Stellhebel 23 in Ruhe befindet. Das zweite Getriebe 5 leistet somit noch keinen kinematischen Beitrag zu der Bewegung in der ersten Transportphase.

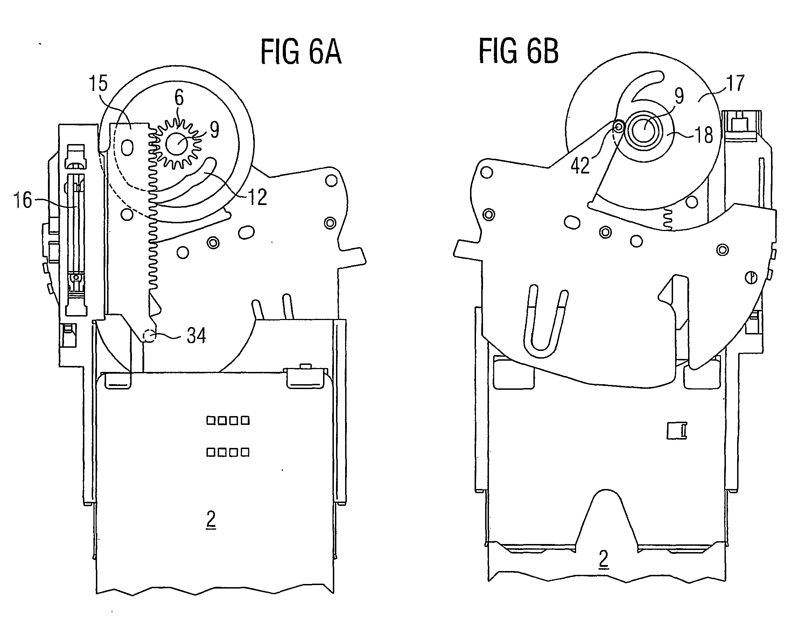

In Figuren 4 und 5 ist der Stellhebel mit dem Bezugszeichen 23 versehen. Der Stellhebel 23 ist als flaches Blechbauteil ausgebildet und weist in einer zweiten Drehachse 20 einen Vorsprung 43 zur Lagerung des Stellhebels 23 in einer nicht dargestellten Ausnehmung eines in den Figuren 6a bis 9b dargestellten Grundträgers 48 auf. Der Stellhebel 23 ist mit einem als Ausnehmung 44 ausgebildeten Anschlag 45 versehen, welcher mit dem Anschlagelement 35 im Betrieb in der Weise zusammenwirkt, dass beim Übergang von einer ersten Transportphase der Karte 2 in der zweiten Transportphase das Anschlagelement 35 der Klemmeinheit den Anschlag 45 des Stellhebels 23 anstößt und auf diese Weise das zweite Führungselement 42 in der Abzweigung 21 aus der zweiten Führung 18 in die dritte Führung 22 gelangt. Da der Stellhebel 23 eine nicht dargestellte Verriegelungseinheit 31 zur Verriegelung eines nicht dargestellten Verschlusses einer nicht dargestellten Einschuböffnung der Kartenaufnahmevorrichtung steuert und antreibt, ist dieser mit einem dritten Führungselement 44 und einem vierten Führungselement 45 jeweils in Form eines Vorsprungs versehen, welche in korrespondierende Ausnehmungen der Verriegelungseinheit eingreifen.

In den Figuren 6a bis 9b ist jeweils eine Draufsicht und eine Unteransicht der Kartenaufnahmevorrichtung 1 in Zusammenstellung der funktionswesentlichen Bauteile in unterschiedlichen Bewegungsphasen dargestellt. In der in Figur 6a, 6b dargestellten Bewegungsphase der ersten Transportphase ist die Karte 2 bereits in die Kartenaufnahmevorrichtung 1 eingeschoben und ein nicht dargestellter Sensor hat den nicht dargestellten Antrieb eingeschaltet. Das Antriebszahnrad 6 treibt das Zahnstangenelement 15 an, so dass sich die Karte 2 in Einwärtsrichtung 14 bewegt. Die Karte 2 ist in nicht näher dargestellter Weise in der Klemmeinheit 3 geklemmt. Das erste Führungselement 34 ist bisher noch nicht mit der ersten Führung 12 in Eingriff geraten.

Wie aus Figur 6b ersichtlich, befindet sich das zweite Führungselement 42 in Eingriff mit der zweiten Führung 18 des zweiten Führungsbauteils 17. Das mit dem Stellhebel 23 verbundene zweite Führungselement 42 bewegt sich bisher nicht, weil die zweite Führung 18 eine um die erste Drehachse 9 konzentrische Kreisform aufweist. Somit verbleibt auch der Stellhebel 23 in Ruhe.

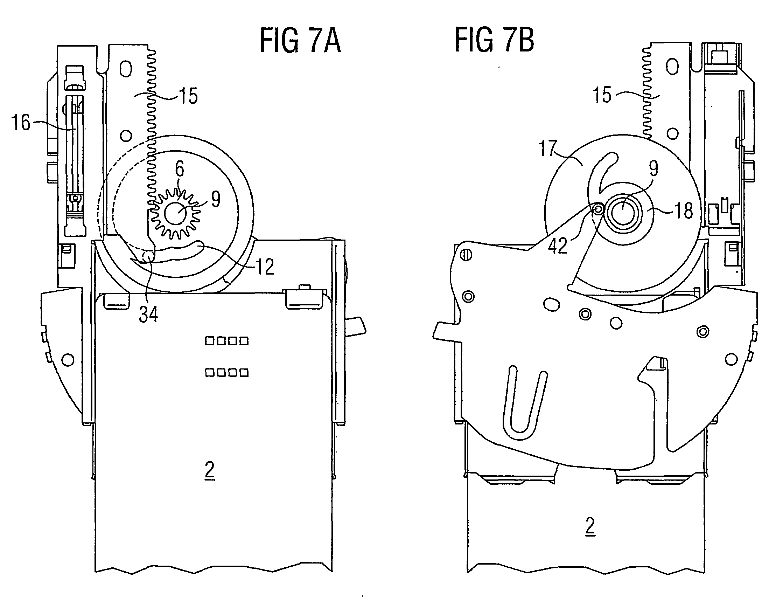

In der in Figur 7a und 7b dargestellten Bewegungsphase der ersten Transportphase befindet sich die Vorrichtung kurz vor dem Übergang von der ersten Transportphase, welche die Karte 2 translatorisch in die Kartenausnahmevorrichtung 1 bewegt, zu der zweiten Transportphase, während welcher die Karte 2 in der Kartenaufnahmevorrichtung 1 im Stillstand verharrt und ein zweites Getriebe 5 die Steuerung und Betätigung einer nicht dargestellten Verriegelungseinheit übernimmt. Das Antriebszahnrad 6 gerät, wie in Figur 7a dargestellt, mit dem Zahnstangenelement 15 außer Eingriff, das erste Führungselement 34 gerät in den ersten Abschnitt 25 der ersten Führung 12 und das Anschlagelement 35 der Klemmeinheit 3 stößt den Stellhebel 23 an dem Anschlag 45 an, so dass sich der Stellhebel 23 um die zweite Drehachse 20 in der Weise dreht, dass das zweite Führungselement 42 in der Abzweigung 21 von der zweiten Führung 18 in die dritte Führung 22 gerät.

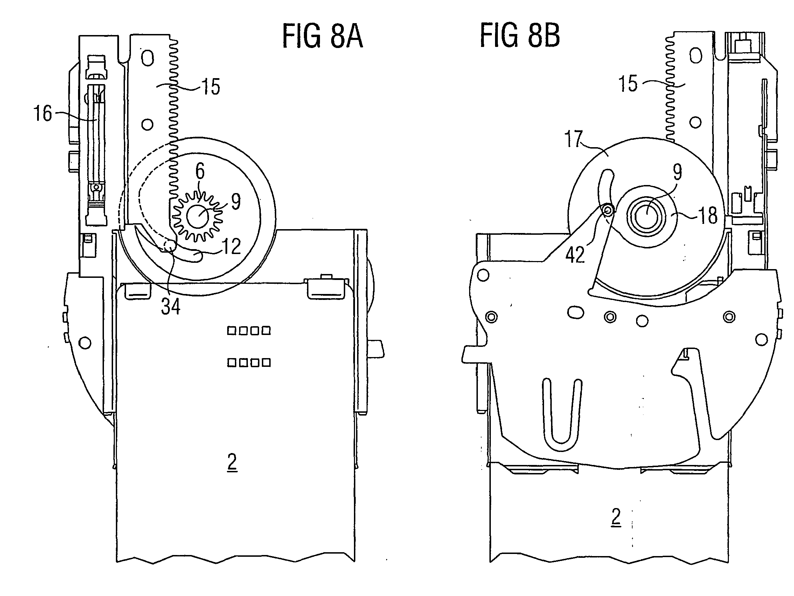

Während der in Figur 8a und 8b dargestellten Bewegungsphase der zweiten Transportphase ist das Antriebszahnrad 6 vollständig außer Eingriff mit der Verzahnung 8 der Zahnstange 15. Auf Grund der Steigung des ersten Abschnitts 25 der zweiten Führung 18 ist die Klemmeinheit 3 in eine Endposition translatorisch verfahren und hat gleichzeitig mittels des Anschlagselements 35 den Anschlag 45 in der Ausnehmung 44 des Stellhebels 23 angestoßen, so dass sich der Stellhebel um die zweite Drehachse 20 gedreht hat und das zweite Führungselement 42 in die dritte Führung 22 geraten ist. Während eines zweiten Teils der zweiten Transportphase befindet sich das erste Führungselement 34 in dem um die erste Drehachse 9 kreisförmig konzentrisch ausgebildeten zweiten Abschnitt 26 der ersten Führung 12, so dass die Klemmeinheit 3 in Ruhe verharrt. Die Führung des zweiten Führungselements 42 in der dritten Führung 22 bewirkt ein Verschwenken des Stellhebels 23, welcher mittels der Führungselemente 46, 47 eine nicht dargestellt Verriegelungseinheit betätigt.

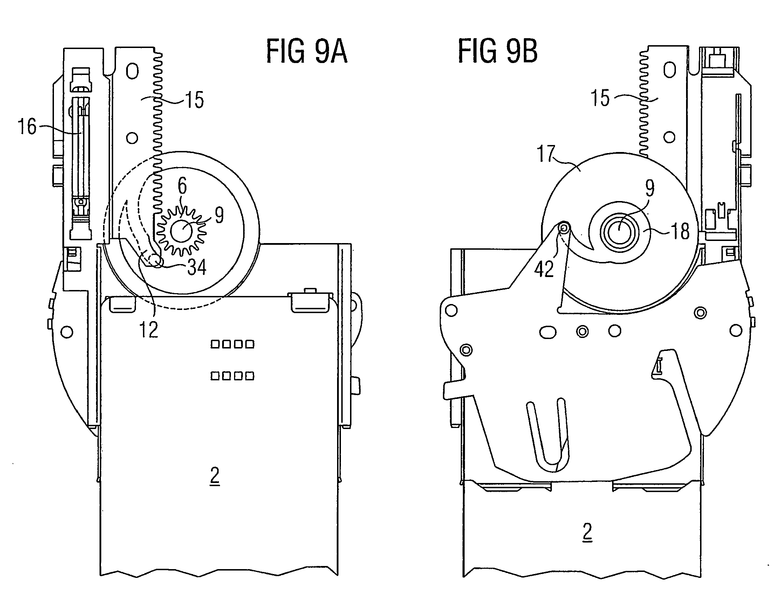

Die Figuren 9a, 9b stellen das Ende der zweiten Transportphase dar. Das erste Führungselement 34 und das zweite Führungselement 42 befinden sich jeweils am Ende des zweiten Abschnitts 26 der ersten Führung 12 bzw. am Ende der dritten Führung 22. Nicht dargestellte Sensoren haben die Stellung des Stellhebels 23 registriert und über eine nicht dargestellte Kontrolleinheit den nicht dargestellten Antrieb abgeschaltet.

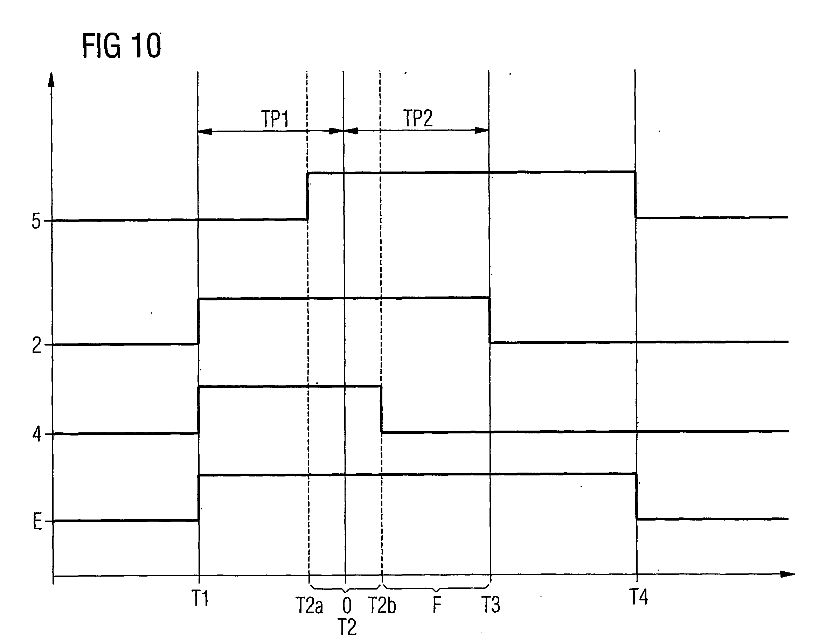

Das Ablaufdiagramm der Figur 10 zeigt die Einschalt- und Abschaltzustände des zweiten Getriebes 5, des ersten Getriebes 4 und des Antriebs E. Vor der Bewegungsphase T1 einer ersten Transportphase TP1 wird die Karte 2 in die Kartenaufnahmevorrichtung 1 eingeführt und der Antrieb E startet. Das erste Getriebe 4 ist an den Antrieb E angekoppelt und transportiert mittels der Zahnstange 15 die Karte 2 bzw. die Klemmeinheit 3 in Einwärtsrichtung 14. Mit Beginn einer zweiten Transportphase TP2 in der Bewegungsphase T2 gerät das erste Getriebe 4 außer Eingriff und das zweite Getriebe 5 beginnt mit dem weiterführenden Transport der Karte 2. Im Rahmen des Übergangs von der ersten Transportphase TP1 zur zweiten Transportphase TP2 beginnt das zweite Getriebe 5 in einer Bewegungsphase T2a, wenn sich das erste Getriebe 4 noch im Eingriff befindet. Bis zur Bewegungsphase T2b bleibt das erste Getriebe 4 überlappend mit dem zweiten Getriebe 5 für eine saubere Übergabe O im Eingriff. Eingangs der zweiten Transportphase TP2 gerät das erste Führungselement 34 in den ersten Abschnitt 25 der ersten Führung 12 und das Antriebszahnrad 6 gerät außer Eingriff mit dem Zahnstangenelement 15. Im Anschluss an die Bewegungsphase T2b findet eine Phase der Feinpositionierung F statt, in welcher nicht dargestellte Mittel, ausgebildet als Verriegelungseinheit, die eingegebene Karte 2 angetrieben von dem zweiten Getriebe 5 an der eingangsseitigen Stirnkante in Einwärtsrichtung 14 in eine Endposition an einen endseitigen Anschlag eines Kontaktsatzes drücken. Eingangs der Feinpositionierung F wird die Klemmung der Klemmeinheit 3 von der Karte 2 transportphasenabhängig gelöst, so dass sich die erforderliche Bewegungsfreiheit zur Feinpositionierung ergibt. In einer Bewegungsphase T3 der zweiten Transportphase TP2beendet das zweite Getriebe 5 den translatorischen Transport der Karte 2 in die Kartenaufnahmevorrichtung 1, das zweite Führungselement 42 gerät von der zweiten Führung 18 über die Abzweigung 21 in die dritte Führung 22, indem der Stellhebel 23 an dem Anschlag 45 von dem Anschlagelement 35 angestoßen wird, und die Verriegelungseinheit wird von dem Stellhebel 23 betätigt. In der Bewegungsphase T4 stellen Sensoren die Endstellung des Stellhebels 23 fest und der Antrieb E wird abgeschaltet. Die Endlage der Karte 2 in der Kartenaufnahmevorrichtung ist erreicht.

## Patentansprüche

1. Kartenaufnahmevorrichtung (1) zum vollständigen, automatischen Einzug einer Karte (2) in die Kartenaufnahmevorrichtung, mit einer Klemmeinheit, welche die Karte (2) festlegt, mit einem mit der Klemmeinheit (3) kinetisch verbundenen Getriebe, mit mindestens einem Antrieb, der das Getriebe antreibt und so die Klemmeinheit (3) in die Kartenaufnahmevorrichtung (1) transportiert, **dadurch gekennzeichnet, dass** die Kartenaufnahmevorrichtung (1) ein erstes Getriebe (4) und ein zweites Getriebe (5) aufweist, welche jeweils zumindest zeitweise von einem Antrieb angetrieben sind, die Getriebe (4, 5) an die Klemmeinheit (3) kinetisch ankoppelbar sind, in einer ersten Transportphase das erste Getriebe (4) an die Klemmeinheit (3) kinetisch angekoppelt ist und in einer zweiten Transportphase das zweite Getriebe (5) an die Klemmeinheit (3) kinetisch angekoppelt ist.

2. Kartenaufnahmevorrichtung (1) nach Anspruch 1, **dadurch gekennzeichnet, dass** das erste Getriebe (4) und das zweite Getriebe (5) in Abhängigkeit von der Transportphase an die Klemmeinheit (3) kinetisch ankoppelbar sind.

3. Kartenaufnahmevorrichtung (1) nach Anspruch 1, **dadurch gekennzeichnet, dass** für den Antrieb des ersten Getriebes (4) und des zweiten Getriebes (5) nur ein Antrieb vorgesehen ist, das erste Getriebe (4) und das zweite Getriebe (5) zwischen dem Antrieb und der Klemmeinheit (3) kinetisch einkoppelbar sind, in einer ersten Transportphase das erste Getriebe (4) zwischen dem Antrieb und der Klemmeinheit (3) kinetisch eingekoppelt ist und in einer zweiten Transportphase das zweite Getriebe (5) zwischen dem Antrieb und der Klemmeinheit (3) kinetisch eingekoppelt ist.

4. Kartenaufnahmevorrichtung (1) nach Anspruch 3, **dadurch gekennzeichnet , dass** das erste Getriebe (4) in einer zweiten Transportphase aus der Kraftübertragung zwischen dem Antrieb und der Klemmeinheit (3) ausgekoppelt ist.

5. Kartenaufnahmevorrichtung (1) nach Anspruch 1, **dadurch gekennzeichnet, dass** das erste Getriebe (4) eine mit der Klemmeinheit (3) verbundene Zahnstange (15) und ein mit dem Antrieb verbundenes Antriebszahnrad (6) aufweist, welches mit der Zahnstange (15) in der ersten Transportphase im Eingriff steht.

6. Kartenaufnahmevorrichtung (1) nach Anspruch 1, **dadurch gekennzeichnet, dass** das zweite Getriebe (4) eine kulissenartige erste Führung aufweist.

7. Kartenaufnahmevorrichtung (1) nach Anspruch 1, **dadurch gekennzeichnet , dass** das zweite Getriebe (4) mit einer Verriegelungseinheit zur Verriegelung eines Verschlusses einer Eingabeöffnung für die aufzunehmende Karte (2) kinetisch gekoppelt ist und die Verriegelungseinheit von dem zweiten Getriebe (4) gesteuert und angetrieben ist.

8. Kartenaufnahmevorrichtung (1) nach Anspruch 1, **dadurch gekennzeichnet, dass** das erste Getriebe (4) derart ausgebildet ist, dass es vor dem Erreichen einer Lese-/Schreibposition der Karte (2) ausgekoppelt ist, das zweite Getriebe (4) ein um eine erste Drehachse (9) drehbares erstes Führungsbauteil (17) mit einer kulissenartigen ersten Führung (12) aufweist, die derart ausgebildet ist, dass sie mit einem mit der Klemmeinheit (3) in Verbindung stehenden ersten Führungselement (34) im Eingriff steht, wenn das erste Getriebe (4) außer Eingriff gerät und die erste Führung (12) die Klemmeinheit (3) in die Lese-/Schreibposition transportiert.

9. Kartenaufnahmevorrichtung (1) nach Anspruch 5 und 8 , **dadurch gekennzeichnet, dass** das erste Führungsbauteil (34) auf einer ersten Drehachse gemeinsam mit dem Antriebszahnrad (6) angeordnet ist.

10. Kartenaufnahmevorrichtung (1) nach Anspruch 1, **dadurch gekennzeichnet , dass** die Kartenaufnahmevorrichtung (1) eine erste lineare Lagerung (13) aufweist, mittels derer die Klemmeinheit (3) in Einwärtsrichtung (14) linear gelagert ist.

11. Kartenaufnahmevorrichtung (1) nach Anspruch 1, **dadurch gekennzeichnet , dass** das erste Getriebe (4) eine lineare Verzahnung (8) aufweist, die Bestandteil eines Zahnstangenelements (15) ist und zwischen dem Zahnstangenelement (15) und der Klemmeinheit (3) ein elastisches Element (16) angeordnet ist und so die Klemmeinheit (3) an dem Abtrieb des ersten Getriebes (4) federnd gelagert ist.

12. Kartenaufnahmevorrichtung (1) nach Anspruch 11, **dadurch gekennzeichnet , dass** das erste Führungselement (34) fester Bestandteil des Zahnstangenelements (15) ist.

13. Kartenaufnahmevorrichtung (1) nach Anspruch 6, **dadurch gekennzeichnet , dass** drehstarr mit dem ersten Führungsbauteil (11) ein zweites Führungsbauteil (17) mit einer zweiten Führung (18) verbunden ist, welche eine Verriegelungseinheit steuert und antreibt.

14. Kartenaufnahmevorrichtung (1) nach Anspruch 13, **dadurch gekennzeichnet , dass** die Verriegelungseinheit einen um eine zweite Drehachse (20) drehbaren Stellhebel (23) mit einem zweiten Führungselement (42) aufweist, welches sich mit der zweiten Führung (18) im Eingriff befindet.

15. Kartenaufnahmevorrichtung (1) nach Anspruch 6 und/oder 13, **dadurch gekennzeichnet , dass** die erste und/oder die zweite Führung (12, 18) als Nuten oder Schlitze in den jeweiligen ersten bzw. zweiten Führungsbauteilen (11, 17) ausgebildet sind.

16. Kartenaufnahmevorrichtung (1) nach Anspruch 13, **dadurch gekennzeichnet , dass** die zweite Führung (12) eine Abzweigung (21) in eine dritte Führung (22) aufweist, in welche das zweite Führungselement (42) eingleitet, wenn oder nachdem das erste Führungselement (34) in der ersten Führung (12) in Eingriff gerät.

17. Kartenaufnahmevorrichtung (1) nach Anspruch 14, **dadurch gekennzeichnet , dass** die Klemmeinheit (3) ein Anschlagelement (35) aufweist, welches den Stellhebel (23) bei Bewegung der Klemmeinheit (3) in Einwärtsrichtung (14) anstößt, so dass das zweite Führungselement (42) in die dritte Führung (22) gerät.

18. Kartenaufnahmevorrichtung (1) nach Anspruch 13, **dadurch gekennzeichnet , dass** die zweite Führung (18) eine zu der ersten Drehachse (9) konzentrische Kreisform aufweist.

19. Kartenaufnahmevorrichtung (1) nach Anspruch 5, **dadurch gekennzeichnet , dass** die erste Führung (12) zwei Abschnitte (25, 26), einen ersten Abschnitt (25) und einen zweiten Abschnitt (26) aufweist, wobei der zweite Abschnitt (26) zu der ersten Drehachse (9) konzentrisch kreisförmig ausgebildet ist.

20. Kartenaufnahmevorrichtung (1) nach Anspruch 14, **dadurch gekennzeichnet, dass** mindestens ein Sensor die Stellung des Stellhebels (23) an eine Kontrolleinheit meldet.

21. Kartenaufnahmevorrichtung (1) nach Anspruch 2, **dadurch gekennzeichnet, dass** das zweite Getriebe (4) mindestens ein drittes Führungselement (46) aufweist, welches eine Verriegelungseinheit zur Verriegelung eines Verschlusses einer Einschuböffnung steuert und antreibt.

## Claims

1. Card receiving device (1) for completely and automatically drawing a card (2) into the card receiving device, having a clamping unit which fixes the card (2), having a gear mechanism which is kinetically connected to the clamping unit (3), having at least one drive which drives the gear mechanism and thus transports the clamping unit (3) into the card receiving device (1), **characterized in that** the card receiving device (1) has a first gear mechanism (4) and a second gear mechanism (5) which are each at least temporarily driven by a drive, the gear mechanisms (4, 5) can be kinetically coupled to the clamping unit (3), the first gear mechanism (4) is kinetically coupled to the clamping unit (3) in a first transportation phase, and the second gear mechanism (5) is kinetically coupled to the clamping unit (3) in a second transportation phase.

2. Card receiving device (1) according to Claim 1,
**characterized in that** the first gear mechanism (4) and the second gear mechanism (5) can be kinetically coupled to the clamping unit (3) as a function of the transportation phase.

3. Card receiving device (1) according to Claim 1, **characterized in that** only one drive is provided to drive the first gear mechanism (4) and the second gear mechanism (5), the first gear mechanism (4) and the second gear mechanism (5) can be kinetically connected between the drive and the clamping unit (3), the first gear mechanism (4) is kinetically connected between the drive and the clamping unit (3) in a first transportation phase, and the second gear mechanism (5) is kinetically connected between the drive and the clamping unit (3) in a second transportation phase.

4. Card receiving device (1) according to Claim 3, **characterized in that** the first gear mechanism (4) is disconnected from the transmission of power between the drive and the clamping unit (3) in a second transportation phase.

5. Card receiving device (1) according to Claim 1, **characterized in that** the first gear mechanism (4) has a toothed rack (15) which is connected to the clamping unit (3), and a drive gearwheel (6) which is connected to the drive and engages with the toothed rack (15) in the first transportation phase.

6. Card receiving device (1) according to Claim 1, **characterized in that** the second gear mechanism (4) has a slotted link-like first guide.

7. Card receiving device (1) according to Claim 1, **characterized in that** the second gear mechanism (4) is kinetically coupled to a locking unit for locking a closure means of an input opening for the card (2) to be received, and the locking unit is controlled and driven by the second gear mechanism (4).

8. Card receiving device (1) according to Claim 1, **characterized in that** the first gear mechanism (4) is formed such that it is disconnected before the card (2) reaches a read/write position, the second gear mechanism (4) has a first guide component (17) which can be rotated about a first axis of rotation (9) and has a slotted link-like first guide (12) which is formed such that it engages with a first guide element (34), which is connected to the clamping unit (3), when the first gear mechanism (4) disengages and the first guide (12) transports the clamping unit (3) into the read/write position.

9. Card receiving device (1) according to Claims 5 and 8, **characterized in that** the first guide component (34) is arranged on a first axis of rotation together with the drive gearwheel (6).

10. Card receiving device (1) according to Claim 1, **characterized in that** the card receiving device (1) has a first linear mount (13) which is used to linearly mount the clamping unit (3) in the inward direction (14).

11. Card receiving device (1) according to Claim 1, **characterized in that** the first gear mechanism (4) has a linear tooth system (8) which is a constituent part of a toothed rack element (15), and an elastic element (16) is arranged between the toothed rack element (15) and the clamping unit (3), and the clamping unit (3) is thus resiliently mounted on the output drive of the first gear mechanism (4).

12. Card receiving device (1) according to Claim 11, **characterized in that** the first guide element (34) is a fixed constituent part of the toothed rack element (15).

13. Card receiving device (1) according to Claim 6, **characterized in that** a second guide component (17) having a second guide (18) is connected to the first guide component (11) such that it is fixed in terms of rotation, said second guide controlling and driving a locking unit.

14. Card receiving device (1) according to Claim 13, **characterized in that** the locking unit has an actuating lever (23) which can be rotated about a second axis of rotation (20) and has a second guide element (42) which engages with the second guide (18).

15. Card receiving device (1) according to Claim 6 and/or 13, **characterized in that** the first and/or the second guide (12, 18) are in the form of grooves or slots in the respective first and second guide components (11, 17).

16. Card receiving device (1) according to Claim 13, **characterized in that** the second guide (12) has a branch (21) into a third guide (22) into which the second guide element (42) slides when or after the first guide element (34) engages in the first guide (12).

17. Card receiving device (1) according to Claim 14, **characterized in that** the clamping unit (3) has a stop element (35) which strikes the actuating lever (23) when the clamping unit (3) moves in the inward direction (14), so that the second guide element (42) moves into the third guide (22).

18. Card receiving device (1) according to Claim 13, **characterized in that** the second guide (18) has a circular shape which is concentric with respect to the first axis of rotation (9).

19. Card receiving device (1) according to Claim 5, **characterized in that** the first guide (12) has two sections (25, 26), a first section (25) and a second section (26), the second section (26) being in the form of a circle which is concentric with respect to the first axis of rotation (9).

20. Card receiving device (1) according to Claim 14, **characterized in that** at least one sensor signals the position of the actuating lever (23) to a control unit.

21. Card receiving device (1) according to Claim 2, **characterized in that** the second gear mechanism (4) has at least one third guide element (46) which controls and drives a locking unit for locking a closure means of an insertion opening.

## Revendications

1. Dispositif de réception (1) de cartes à puce destiné à introduire automatiquement et complètement une carte à puce (2) dans le dispositif de réception de cartes à puce, où ledit dispositif comporte une unité de serrage qui fixe la carte à puce (2), une transmission en liaison cinétique avec l'unité de serrage (3), au moins un système d'entraînement qui commande la transmission et, ainsi, transporte l'unité de serrage (3) dans le dispositif de réception (1) de cartes à puce, **caractérisé par le fait que** le dispositif de réception (1) de cartes à puce comporte une première transmission (4) et une deuxième transmission (5), lesquelles sont au moins temporairement commandées par un système d'entraînement, que les transmissions (4, 5) peuvent être mises en couplage cinétique avec l'unité de serrage (3), que, pendant une première phase de transport, la première transmission (4) est en couplage cinétique avec l'unité de serrage (3) et, pendant une deuxième phase de transport, la deuxième transmission (5) est en couplage cinétique avec l'unité de serrage (3).

2. Dispositif de réception (1) de cartes à puce selon la revendication 1, **caractérisé par le fait que** la première transmission (4) et la deuxième transmission (5) peuvent être mises en couplage cinétique avec l'unité de serrage (3) en fonction de la phase de transport.

3. Dispositif de réception (1) de cartes à puce selon la revendication 1, **caractérisé par le fait que**, pour la commande de la première transmission (4) et de la deuxième transmission (5), il n'est prévu qu'un seul système d'entraînement, que la première transmission (4) et la deuxième transmission (5) peuvent être mises en couplage cinétique entre le système d'entraînement et l'unité de serrage (3), que, dans une première phase de transport, la première transmission (4) est mise en couplage cinétique entre le système d'entraînement et l'unité de serrage (3) et, dans une deuxième phase de transport, la deuxième transmission (5) est mise en couplage cinétique entre le système d'entraînement et l'unité de serrage (3).

4. Dispositif de réception (1) de cartes à puce selon la revendication 3, **caractérisé par le fait que** la première transmission (4) est, dans une deuxième phase de transport, découplée de la transmission de force entre le système d'entraînement et l'unité de serrage (3).

5. Dispositif de réception (1) de cartes à puce selon la revendication 1, **caractérisé par le fait que** la première transmission (4) comporte une crémaillère (15) liée à l'unité de serrage (3) et un pignon d'entraînement (6) qui est lié au système d'entraînement et qui est, pendant la première phase de transport, en prise avec la crémaillère (15).

6. Dispositif de réception (1) de cartes à puce selon la revendication 1, **caractérisé par le fait que** la deuxième transmission (4) comporte un premier système de guidage du genre coulisse.

7. Dispositif de réception (1) de cartes à puce selon la revendication 1, **caractérisé par le fait que** la deuxième transmission (4) est mise en couplage cinétique avec une unité de verrouillage destinée à verrouiller un couvercle d'une ouverture d'introduction pour la carte à puce (2) à réceptionner et que l'unité de verrouillage est commandée et entraînée par la deuxième transmission (4).

8. Dispositif de réception (1) de cartes à puce selon la revendication 1, **caractérisé par le fait que** la première transmission (4) est conçue de manière telle qu'elle est découplée avant que la carte à puce (2) parvienne à une position de lecture et écriture, que la deuxième transmission (4) comporte une première pièce de guidage (17), qui peut tourner autour d'un premier axe (9) et qui a un premier système de guidage (12) du genre coulisse conçu de telle manière qu'il est en prise avec un premier organe de guidage (34) lié à l'unité de serrage (3) lorsque la première transmission (4) n'est plus en prise et que le premier système de guidage (12) transporte l'unité de serrage (3) dans la position de lecture et écriture.

9. Dispositif de réception (1) de cartes à puce selon les revendications 5 et 8, **caractérisé par le fait que** le premier organe de guidage (34) est disposé sur un premier axe de rotation en commun avec le pignon d'entraînement (6).

10. Dispositif de réception (1) de cartes à puce selon la revendication 1, **caractérisé par le fait que** le dispositif de réception (1) de cartes à puce comporte une première suspension linéaire (13) au moyen de laquelle l'unité de serrage (3) est suspendue linéairement dans le sens (14) allant vers l'intérieur.

11. Dispositif de réception (1) de cartes à puce selon la revendication 1, **caractérisé par le fait que** la première transmission (4) comporte une denture linéaire (8), qui fait partie d'un élément de crémaillère (15) et qu'un élément élastique (16) est placé entre l'élément de crémaillère (15) et l'unité de serrage (3) et qu'ainsi l'unité de serrage (3) est suspendue d'une façon élastique sur la sortie de la première transmission (4).

12. Dispositif de réception (1) de cartes à puce selon la revendication 11, **caractérisé par le fait que** le premier organe de guidage (34) fait partie intégrante de l'élément de crémaillère (15).

13. Dispositif de réception (1) de cartes à puce selon la revendication 6, **caractérisé par le fait que**, en blocage de rotation avec la première pièce de guidage (11), une deuxième pièce de guidage (17) est liée à un deuxième système de guidage (18), lequel commande et entraîne une unité de verrouillage.

14. Dispositif de réception (1) de cartes à puce selon la revendication 13, **caractérisé par le fait que** l'unité de verrouillage comporte un levier de réglage (23) qui tourne autour d'un deuxième axe de rotation (20) et qui a un deuxième organe de guidage (42), lequel est en prise avec le deuxième système de guidage (18).

15. Dispositif de réception (1) de cartes à puce selon la revendication 6 et / ou la revendication 13, **caractérisé par le fait que** le premier et / ou le deuxième système de guidage (12, 18) est conçu sous la forme de rainures ou de fentes dans la première et, respectivement, dans la deuxième pièce de guidage (11, 17) correspondantes.

16. Dispositif de réception (1) de cartes à puce selon la revendication 13, **caractérisé par le fait que** le deuxième système de guidage (12) comporte une dérivation (21) vers un troisième système de guidage (22), dans lequel s'engage et glisse le deuxième organe de guidage (42) lorsque ou une fois que le premier organe de guidage (34) entre en prise dans le premier système de guidage (12).

17. Dispositif de réception (1) de cartes à puce selon la revendication 14, **caractérisé par le fait que** l'unité de serrage (3) comporte une butée (35) qui rencontre le levier de réglage (23) lorsque l'unité de serrage (3) se déplace vers l'intérieur (14), si bien que le deuxième organe de guidage (42) s'engage dans le troisième système de guidage (22).

18. Dispositif de réception (1) de cartes à puce selon la revendication 13, **caractérisé par le fait que** le deuxième système de guidage (18) a une forme circulaire concentrique par rapport au premier axe de rotation (9).

19. Dispositif de réception (1) de cartes à puce selon la revendication 5, **caractérisé par le fait que** le premier système de guidage (12) a deux sections (25, 26), une première section (25) et une deuxième section (26), la deuxième section (26) ayant une forme circulaire concentrique par rapport au premier axe de rotation (9).

20. Dispositif de réception (1) de cartes à puce selon la revendication 14, **caractérisé par le fait que** au moins un détecteur indique la position du levier de réglage (23) à une unité de contrôle.

21. Dispositif de réception (1) de cartes à puce selon la revendication 2, **caractérisé par le fait que** la deuxième transmission (4) a au moins un troisième organe de guidage (46), qui commande et entraîne une unité de verrouillage permettant de verrouiller un couvercle d'une ouverture d'introduction.
